# EUROPÄISCHE PATENTSCHRIFT

(11) **EP 0 933 242 B1**
(45) Veröffentlichungstag und Bekanntmachung des Hinweises auf die Patenterteilung: **22.05.2002**
(21) Anmeldenummer: 99100875.6
(22) Anmeldetag: 19.01.1999
(51) Int. Cl.: B60J 7/20, B60J 7/185

(54) **Antriebseinrichtung für einen Verdeckkastendeckel**
Driving device for vehicle top
Dispositif d'entraînement d'une capote de véhicule

(30) Priorität: 20.01.1998 DE 19801853
(43) Veröffentlichungstag der Anmeldung: 04.08.1999
(73) Patentinhaber: CTS Fahrzeug-Dachsysteme GmbH, 21079 Hamburg (DE)
(72) Erfinder: Valett, Ralf, 22145 Hamburg (DE); Hahn, Gerald, 21149 Hamburg (DE)
(74) Vertreter: Müller, Gottfried

(56) Entgegenhaltungen:
- EP-A- 0 846 584
- DE-A- 4 437 571
- US-A- 3 891 252
- US-A- 5 267 769
- US-A- 5 558 389

## Beschreibung

Die Erfindung betrifft eine Antriebseinrichtung für einen Verdeckkastendeckel gemäß dem Oberbegriff des Patentanspruches 1.

Aus der nachveröffentlichten Druckschrift EP-A-0 846 584 A1, die gemäß Art. 54 (3) und (4) EPÜ nur im Hinblick auf die Neuheit des Erfindungsgegenstandes zu berücksichtigen ist, geht eine Antriebseinrichtung für einen Verdeckkastendeckel hervor, wobei der an seinen beiden Längsseiten über Viergelenkscharniere am Aufbau abgestützte Verdeckkastendeckel über eine elektronische Antriebseinrichtung von einer Schließstellung in eine Offenstellung verlagerbar ist. Zugleich wird diese Antriebseinrichtung zum vor- bzw. nachgelagerten Ver- bzw. Entriegeln der Verschlüsse für den Verdeckkastendeckel genutzt.

In der Druckschrift US-A-5 267 769 wird eine Antriebseinrichtung für einen Verdeckkastendeckel mit motorischen Stellantrieben für den Verdeckverschluss des Deckels beschrieben. Die Stellantriebe dienen ausschließlich der Auslösung des als Schnappverschluss ausgebildeten Verdeckverschlusses, wodurch der Deckel zu öffnen ist. Das Schließen des Deckels ist dagegen manuell durchzuführen. In dieser Druckschrift wird auch keine Sicherung des Deckels gegen ein versehentliches, unbeabsichtigtes Öffnen beschrieben.

Aufgabe der Erfindung ist es, eine Antriebseinrichtung der eingangs genannten Gattung so weiterzubilden, dass sie bei guter Funktion einen vereinfachten Aufbau aufweist.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, dass die Antriebseinrichtung lediglich ein angetriebenes Viergelenkgetriebe umfasst, das den Verdeckkastendeckel von einer Schließstellung in eine hochgeschwenkte Offenstellung bewegt und umgekehrt, wobei einer der Lenker des Viergelenkgetriebes gleichzeitig einen Schlepphebel steuert, der über Verbindungselemente den zumindest einen Verschluss für den Verdeckkastendeckel betätigt.

Durch die Ausbildung des Viergelenkgetriebes und den Schlepphebel erfolgt eine selbsttätige Verspannung des Systems in geschlossenem Zustand, so daß keine zusätzlichen Verriegelungselemente erforderlich sind. Bei geschlossenem und verriegeltem Verdeckkastendeckel nimmt das Viergelenkgetriebe eine Übertotpunktstellung ein. Ein Endanschlag im Hydraulikzylinder begrenzt zudem die Antriebsbewegung des Hydraulikzylinders. Ferner erfolgt durch die Drehwippe ein automatischer Längenausgleich beider Bowdenzüge.

Die Antriebseinrichtung kann schräg im Fahrzeug angeordnet werden, wodurch sie platzsparend und flexibel einbaubar ist. Mittels der Gasdruckfeder erfolgt eine Dämpfung und Stabilisierung in der Offenstellung des Verdeckkastendeckels. Über eine geeignete Ausbildung der Antriebshebel ist es möglich, die Winkelgeschwindigkeit des Verdeckkastendeckels so zu steuern, daß sie in den Endpositionen möglichst niedrig ist. Die symmetrische Anordnung aller Elemente gewährleistet einen minimalen Einfluß der auftretenden Biegemomente. Ferner ist eine Notbetätigung ohne großen Aufwand möglich.

Ein Ausführungsbeispiel der Erfindung ist in der Zeichnung dargestellt und wird im folgenden näher erläutert.

Es zeigen
- Fig. 1: eine perspektivische Ansicht von schräg hinten auf einen mit einem Verdeckkastendeckel versehenen Personenkraftwagen und auf eine Antriebseinrichtung für den Verdeckkastendeckel, wobei der Verdeckkastendeckel in seiner Schließstellung dargestellt ist,

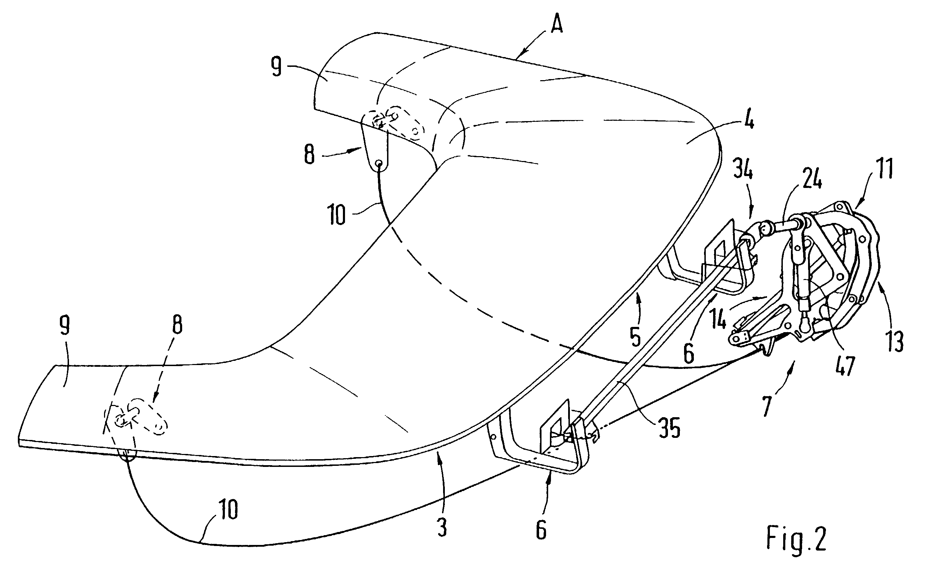

- Fig. 2: eine perspektivische Ansicht von schräg hinten auf den Verdeckkastendeckel und dessen Antriebseinrichtung,

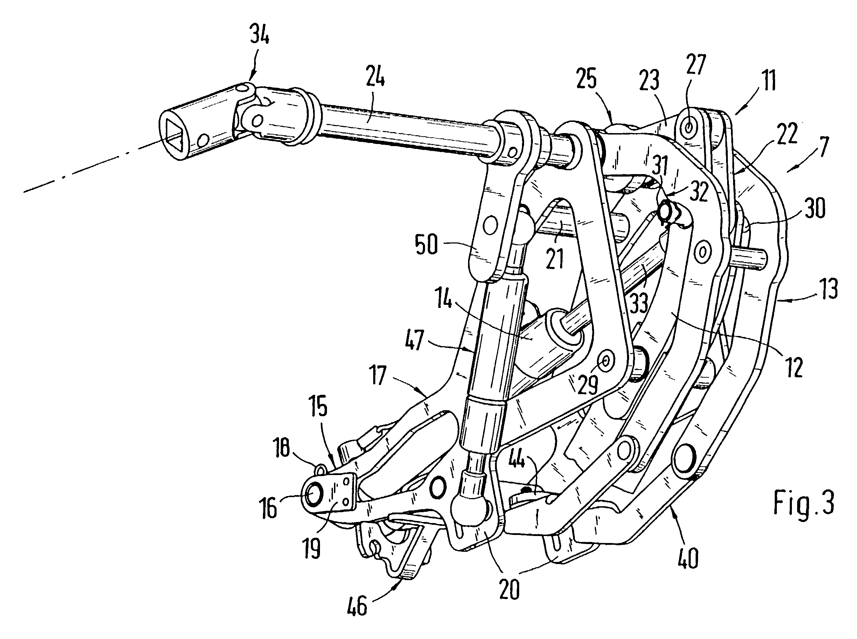

- Fig. 3: eine perspektivische Ansicht von schräg hinten auf die Antriebseinrichtung,

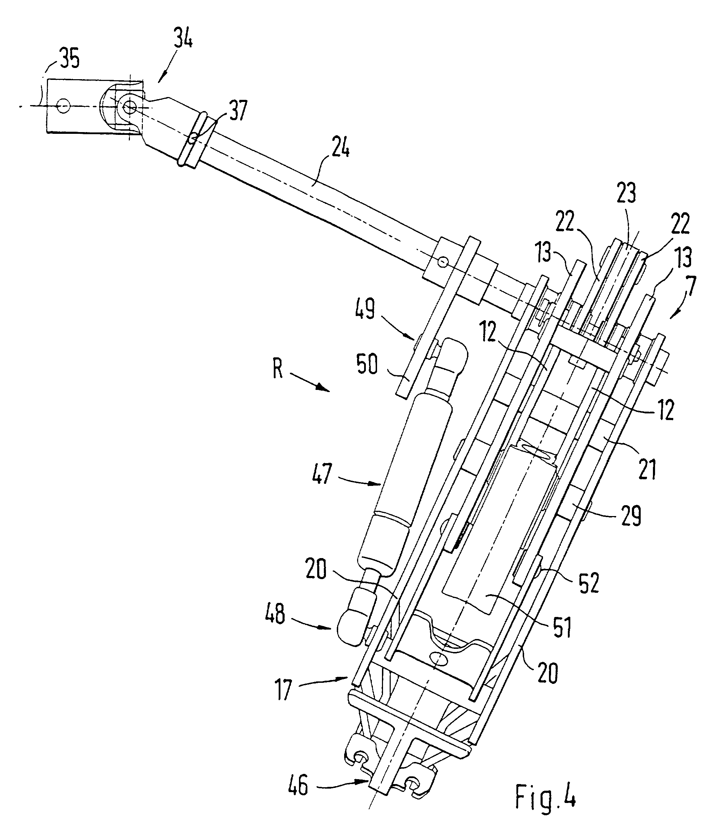

- Fig. 4: eine Ansicht von oben auf die Antriebseinrichtung ohne Bowdenzüge und Hydraulikzylinder,
- Fig. 5: eine Ansicht in Pfeilrichtung R der Fig. 4, wobei die Antriebseinrichtung bei geöfnetem Verdeckkastendeckel dargestellt ist,
- Fig. 6: eine Ansicht in Pfeilrichtung R der Fig. 4 in geschlossener Stellung des Verdeckkastendeckels, wobei die Verschlüsse noch nicht verriegelt sind,
- Fig. 7: eine Ansicht in Pfeilrichtung R der Fig. 4 in geschlossener und verriegelter Stellung des Verdeckkastendeckels und
- Fig. 8: eine perspektivische Darstellung des Längenausgleichselementes mit der Drehwippe.

Das durch einen Personenkraftwagen gebildete Kraftfahrzeug 1 weist oberhalb einer Gürtellinie 2 ein Verdeck auf, das in seiner zurückgeklappten Ablagestellung in einem heckseitigen Aufnahmeraum 3 versenkt untergebracht ist. Der durch einen Verdeckkasten gebildete Aufnahmeraum 3 ist nach oben hin durch einen Verdeckkastendeckel 4 abgedeckt, der in der Draufsicht gesehen etwa U-förmig ausgebildet ist, wobei die freien Enden von seitlichen Schenkel 9 nach vorne zeigen. Der Verdeckkastendeckel 4 ist an seinem hinteren querverlaufenden Rand 5 über zwei beabstandete Scharniere 6 am angrenzenden feststehenden Aufbau schwenkbar angelenkt und mittels einer Antriebseinrichtung 7 von einer Schließstellung A in eine nicht näher dargestellte hochgeschwenkte Offenstellung B bewegbar und umgekehrt. Zum Einklappen des Verdecks in den Verdeckkasten bzw. zum Schließen des Verdecks wird der Verdeckkastendeckel 4 zeitversetzt in seine aufrechte Offenstellung B verlagert, in der er sich außerhalb des Schwenkbereiches des Verdecks befindet.

In der Schließstellung A des Verdeckkastendeckels 4 ist dieser über zumindest einen lösbaren Verschluß 8 am angrenzenden feststehenden Aufbau festlegbar. Im Ausführungsbeispiel ist an beiden seitlich außenliegenden Schenkeln 9 des U-förmigen Verdeckkastendeckels 4 jeweils ein Verschluß 8 vorgesehen. Zur Festlegung des Verdeckkastendeckels 4 in der Schließstellung A können auch mehr als zwei Verschlüsse verwendet werden. Mittels der Verschlüsse 8 erfolgt ein Verriegeln bzw. Entriegeln des Verdeckkastendeckels 4 am Aufbau. Jeder Verschluß 8 umfaßt einen nicht näher dargestellten verschwenkbaren Verschlußhaken, der in verriegelter Stellung einen feststehenden Haltebolzen hintergreift. Die Verschwenkbewegung jedes Verschlußhakens wird im Ausführungsbeispiel von einem Bowdenzug 10 gesteuert, dessen eines Ende mit dem Verschlußhaken und dessen anderes Ende mit der Antriebseinrichtung 7 in Wirkverbindung steht.

Die Antriebseinrichtung 7 umfaßt ein angetriebenes Viergelenkgetriebe 11, das den Verdeckkastendeckel 4 von der Schließstellung A in die hochgeschwenkte Offenstellung B bewegt und umgekehrt, wobei einer der Lenker (z.B. 12) des Viergelenkgetriebes 11 gleichzeitig einen Schlepphebel 13 steuert, der über Verbindungselemente den zumindest einen Verschluß 8 für den Verdeckkastendeckel 4 betätigt. Die Antriebseinrichtung 7 ist so ausgelegt, daß sie mit einem einzigen Antriebsprinzip beide Funktionen erfüllt, nämlich das Schwenken des Verdeckkastendeckels 4 und das zeitlich vor- bzw. nachgeschaltete Ver- bzw. Entriegeln des Verdeckkastendeckels 4 am Aufbau. Das Viergelenkgetriebe 11 kann beliebig, d.h. hydraulisch, elektrisch, mechanisch oder dergleichen angetrieben sein.

Im Ausführungsbeispiel erfolgt der Antrieb des Viergelenkgetriebes 11 über einen Hydraulikzylinder 14. Das untere Ende 15 des Hydraulikzylinders 14 ist an einem querverlaufenden Bolzen 16 abgestützt, der am Fuße eines Antriebsgehäuses 17 drehbar gelagert ist.

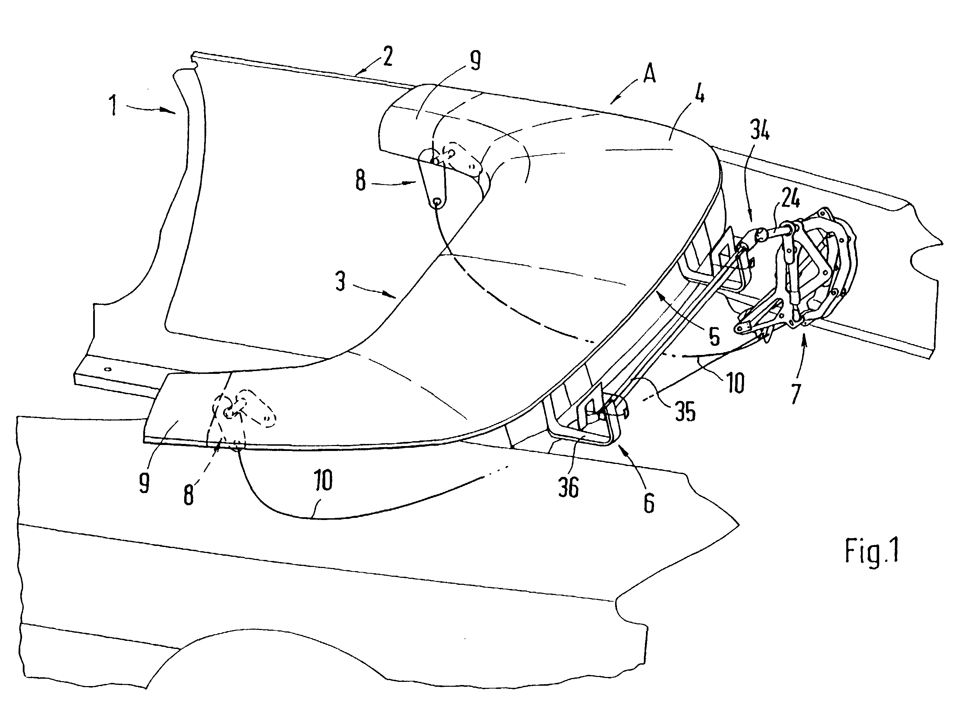

Das Antriebsgehäuse 17 umfaßt zwei mit Abstand zueinander angeordnete, mit großflächigen Öffnungen versehene Rahmenteile 20, die über mehrere querverlaufende Distanzelemente 21 in definiertem Abstand voneinander gehalten sind. Entsprechend Fig. 1 ist das Antriebsgehäuse 17 in einem seitlich außenliegenden Bereich des Aufbaus an einer Halteplatte oder direkt am angrenzenden Aufbau mittels Schrauben in Lage gehalten.

Das Viergelenkgetriebe 11 umfaßt zwei durch ein Koppelglied 22 gelenkig miteinander verbundene Lenker 12, 23. Ein erster Lenker 23 ist mit seinem einen Ende 25 - etwa in der Ebene des Hydraulikzylinders 14 - verdrehfest mit einer Antriebswelle 24 für den Verdeckkastendeckel 4 verbunden. Das eine Ende 25 des ersten Lenkers 23 ist mit einer die Antriebswelle 24 umgebenden Hülse verschweißt, wobei die Hülse über einen Stift fest mit der Antriebswelle 24 verbunden ist. Das andere, freie Ende 26 des ersten Lenkers ist über einen Gelenkbolzen 27 drehbar mit dem Koppelglied 22 verbunden, wobei das Koppelglied 22 im Ausführungsbeispiel durch zwei symmetrische Teile gebildet wird, die sich beiderseits des ersten Lenkers 23 erstrecken. Das andere Ende 28 des Koppelgliedes 22 ist mit dem zweiten Lenker 12 drehbar verbunden. Die feste Drehachse des zweiten Lenkers 12 ist gehäuseseitig vorgesehen und wird durch einen querverlaufenden, endseitig mit dem Antriebsgehäuse 17 verbundenen Bolzen 29 gebildet. Der zweite Lenker 12 ist im Ausführungsbeispiel ebenfalls doppellagig ausgebildet, wobei die beiden Teile seitlich außerhalb des Koppelgliedes 22 angeordnet sind.

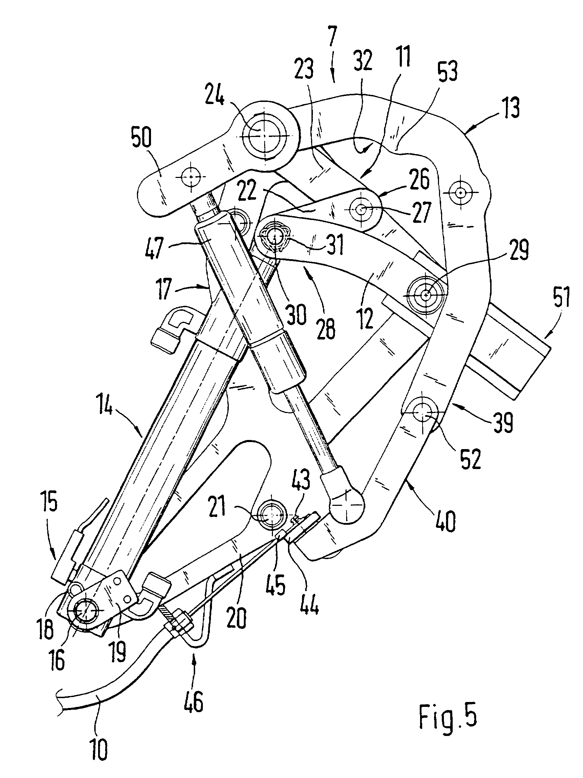

Gemäß Fig. 5 weist der zweite Lenker 12 - in der Seitenansicht gesehen - eine leicht gebogene, etwa bananenförmige Form auf. Ein das Koppelglied 22 mit dem vorderen Ende des zweiten Lenkers 12 verbindender Bolzen 30 weist eine größere Quererstreckung auf als die Breite des zweiten Lenkers 12, wobei auf zumindest einen vorstehenden Bereich des Bolzens 30 eine drehbare Hülse 31 aufgesetzt ist, die je nach Lage des Viergelenkgetriebes 11 mit einer darüberliegenden Kurvenbahn 32 des Schlepphebels 13 in Wirkverbindung steht.

Im Ausführungsbeispiel überragt der Bolzen 30 den zweiten Lenker 12 beidseitig und auf beide vorstehenden Bereiche sind jeweils drehbare Hülsen 31 aufgesteckt, die mit korrespondierenden Kurvenbahnen 32 des doppellagigen Schlepphebels 13 zusammenwirken. Das Viergelenkgetriebe 11 ist so abgestimmt, daß die Winkelgeschwindigkeit der Antriebswelle 24 in den Endpositionen des Verdeckkastendeckels 4 kleiner ist als im Mittelbereich der Verschwenkbewegung. Die Winkelgeschwindigkeit der Antriebswelle 24 geht in Schließstellung A des Verdeckkastendeckels 4 gegen null, so daß die weitere Bewegung des zweiten Lenker 12 allein der Betätigung der Verschlüsse 8 zugute kommt. Das obere Ende der Kolbenstange 33 wird von dem das Koppelglied 22 mit dem zweiten Lenker 12 verbindenden Bolzen 30 aufgenommen und zwar im Freiraum zwischen den beiden Teilen des Koppelgliedes 22. Die Kolbenstange 33 überträgt die Kraft des Hydraulikzylinders 14 auf den Bolzen 30. Das Koppelglied 22 überträgt als Zwischenhebel die Kraft auf den ersten Lenker 23 (Antriebshebel), wogegen der zweite Lenker 12 zur Abstützung und Steuerung der Bewegung des Hydraulikzylinders 14 dient. Der erste Lenker 23 ist mit der Antriebswelle 24 verstiftet, die im Antriebsgehäuse 17 drehbar gelagert ist.

Gemäß Fig. 1 ist aus Platzgründen die Antriebseinrichtung 7 schräg im seitlichen Bereich des Kofferraums angeordnet, weshalb eine Kraftumleitung mit Hilfe eines Kreuzgelenks 34 erforderlich ist. Das Kreuzgelenk 34 verbindet die relativ kurze, am Antriebsgehäuse 17 gelagerte erste Antriebswelle 24 mit der quer verlaufenden zweiten Antriebswelle 35, wobei die zweite Antriebswelle 35 verdrehfest mit den verdeckkastendeckelseitig angeordneten Scharnierabschnitten 36 verbunden ist. Die erste Antriebswelle 24 ist über einen Stift 37 mit dem Kreuzgelenk 34 verbunden, das das Antriebsmoment auf die Drehachse des Verdeckkastendeckels 4 überträgt. Der Stift 37 ist als Sollbruchstelle des Systems ausgelegt, um bei unsachgemäßer Belastung der Antriebseinrichtung 7 abzuscheren und somit größere Beschädigungen zu vermeiden.

Es besteht natürlich bei gegebenem Bauraum die Möglichkeit, nur eine durchgehende Antriebswelle zu verwenden, wobei dann das Antriebsgehäuse 17 mit dem Viergelenkgetriebe 11 in seitlicher Fortsetzung der Antriebswelle außerhalb des Scharniers angeordnet ist. Bei dieser Anordnung kann auf ein Kreuzgelenk verzichtet werden (nicht näher dargestellt).

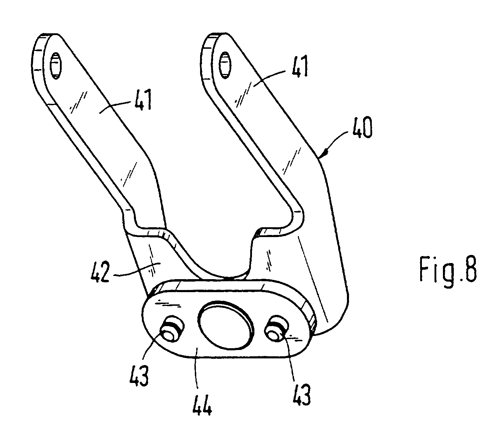

Der einen gebogenen Formverlauf aufweisende Schlepphebel 13 ist mit seinem oberen Ende 38 zwischen den Rahmenteilen 20 des Gehäuses 17 auf der ersten Antriebswelle 24 drehbar gelagert. An das untere freie Ende 39 des Schlepphebels 13 ist an ein Längenausgleichselement 40 drehbar angeschlossen. Das Längenausgleichselement 40 umfaßt gemäß Fig. 8 zwei längliche abgewinkelte Schenkel 41, die entfernt von der Anlenkung an den Schlepphebel 13 über einen querverlaufenden Plattenabschnitt 42 miteinander verbunden sind. Auf der Oberseite des Plattenabschnitts 42 ist eine mit zwei Seilhaltestiften 43 versehene Drehwippe 44 gelenkig gelagert, wobei die endseitigen Seilösen 45 der Bowdenzüge 10 an den Seilhaltestiften 43 befestigbar sind. Oberhalb des das untere Ende des Hydraulikzylinders 14 aufnehmenden Bolzens 16 ist am Antriebsgehäuse 17 ein Bowdenzughalter 46 angebracht, an dem die einen Enden der Bowdenzughüllen befestigbar sind. Der zweite Lenker 12 des Viergelenkgetriebes 11 und der Schlepphebel 13 sind derart aufeinander abgestimmt, daß der zweite Lenker 12 in seiner Endposition den Schlepphebel 13 mechanisch gegen Zurückdrehen sichert.

Außerhalb des Antriebsgehäuses 17 ist eine Gasdruckfeder 47 vorgesehen, die die Öffnungsstellung B des Verdeckkastendeckels 4 unterstützt. Die Gasdruckfeder 47 soll den Verdeckkastendeckel 4 im Falle eines Hydraulikdruckabfalls des Hydraulikzylinders 14 sicher offen halten. Die Gasdruckfeder 47 ist mit ihrem unteren Ende 48 an der Außenseite des Antriebsgehäuses 17 abgestützt. Das andere Ende 49 ist mit einem Kurbelarm 50 gelenkig verbunden, der außerhalb des Antriebsgehäuses 17 verdrehfest mit der ersten Antriebswelle 24 verbunden ist. Der Kurbelarm 50 ist mit der Antriebswelle 24 verstiftet.

Die Drehwippe 44 dient zum Spannen der Seile der Bowdenzüge 10, mit denen die beidseitig angeordneten Verschlüsse 8 des Verdeckkastendeckels 4 verriegelt werden können. Die Drehwippe 44 verhindert als Längenausgleich eine ungleichmäßige Belastung der Seile und damit einem Seilbruch.

Die wesentlichen Teile der Antriebseinrichtung 7 sind symmetrisch zur Antriebsebene des Hydraulikzylinders 14 ausgebildet, um den Einfluß von Biegekräften auf die Funktion des Systems zu verhindern. Bei Ausfall von Elektrik und Hydraulik bietet ein mit dem zweiten Hebel 12 verbundenes Notbetätigungselement 51 die Möglichkeit des manuellen Betriebs. Hierzu kann eine stabile Stange (z.B. Radmutter-Schlüssel) in das Notbetätigungselement 51 eingeschoben und das erforderliche Moment aufgebracht werden.

Fig. 5 zeigt die Antriebseinrichtung 7 in geöffnetem Zustand des Verdeckkastendeckels 4. Diese Position wird durch die ausgefahrene Gasdruckfeder 47 unterstützt. Die beiden Verschlüsse 8 für den Verdeckkastendeckel 4 sind entriegelt. Die Kolbenstange 33 des Hydraulikzylinders 14 ist eingefahren und die Lenker 12, 23 sowie das Koppelglied 22 des Viergelenkgetriebes 11 nehmen die in Fig. 5 gezeigte Position ein. Zum Schließen des Verdeckkastendeckels 4 wird der Hydraulikzylinder 14 mit Druck beaufschlagt und die Kolbenstange 33 fährt aus. Der zweite Lenker 12 wird bei der Ausfahrbewegung der Kolbenstange 33 um seine ortsfeste Drehachse (Bolzen 29) hochgeschwenkt. Über das Koppelglied 22 wird der erste Lenker 23 des Viergelenkgetriebes 11 ebenfalls entsprechend hochgeschwenkt und damit die Antriebswelle 24 in Richtung Schließen verdreht.

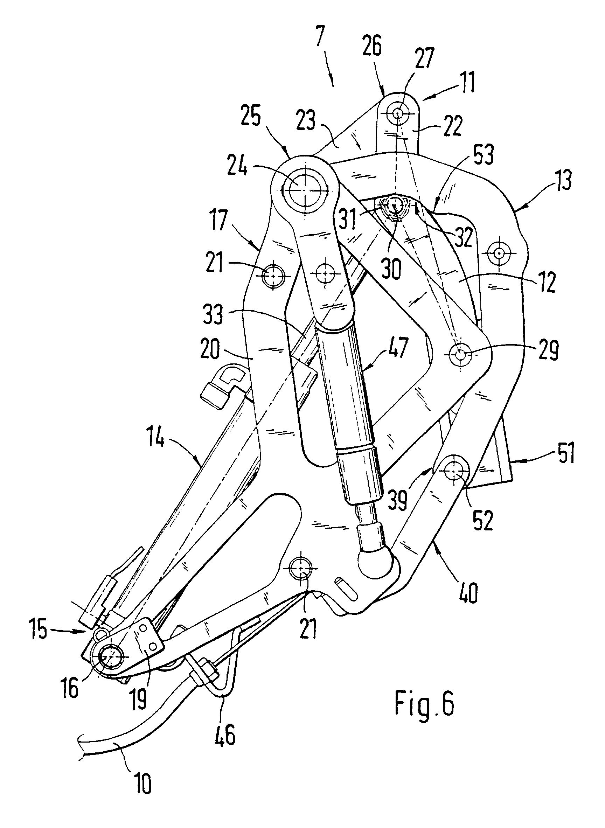

Wenn der Verdeckkastendeckel 4 die in Fig. 6 gezeigte geschlossene Position erreicht hat, berühren die auf dem Bolzen 30 drehbar angeordneten Hülsen 31 den auf der Antriebswelle 24 gelagerten Schlepphebel 13, der über Gelenkbolzen 52 mit dem Längenausgleichselement 40 verbunden ist, auf den die mit zwei Seilhaltestiften 43 versehene Drehwippe 44 gelenkig gelagert ist.

Beim weiteren Ausfahren des Hydraulikzylinders 14 rollen die Hülsen 31 jeweils auf einer definierten Kurvenbahn 32 des Schlepphebels 13 ab und drücken somit den Schlepphebel 13 hoch. Hierdurch erfolgt das Spannen der Seile der Bowdenzüge 10 gegen im Verschluß 8 angeordnete Zugfedern, die die Verschlüsse 8 in geöffneter Stellung fixieren.

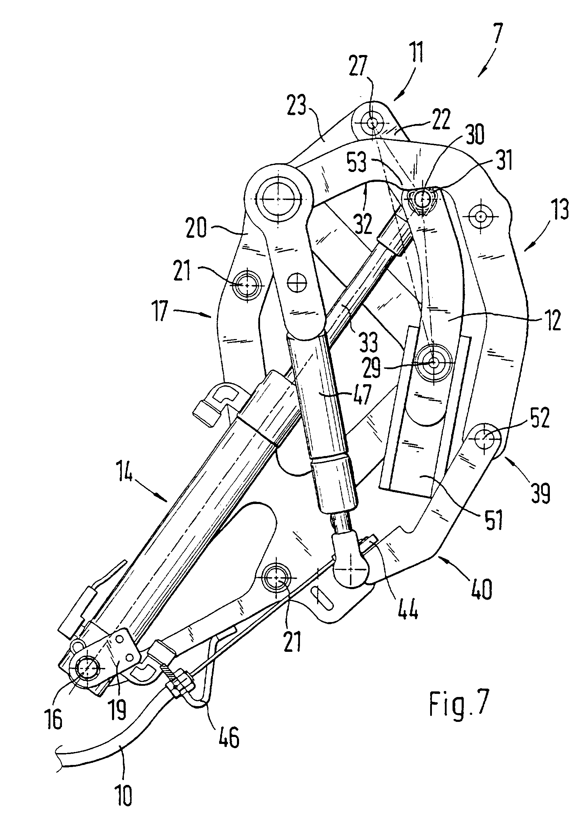

Der verschlossene und verriegelte Zustand des Verdeckkastendeckels ist in Fig. 7 dargestellt. In dieser Position haben die Hülsen 31 einen Nockenabschnitt 53 der Kurvenbahnen 32 überdrückt. Aus dieser Position kann das System ausschließlich durch Aufbringen eines Moments um den fahrzeugfesten Drehpunkt 29 des zweiten Lenkers 12 gebracht werden, was gleichermaßen hydraulisch, elektrisch oder mechanisch erfolgen kann. Das Viergelenkgetriebe 11 nimmt bei geschlossenem und verriegeltem Verdeckkastendeckel 4 eine Übertotpunktlage ein. Zugleich wird die Antriebsbewegung des Hydraulikzylinders 14 durch einen nicht näher dargestellten Endanschlag im Hydraulikzylinder 14 begrenzt.

Der Entriegelungs- und Öffnungsvorgang des Verdeckkastendeckels 4 erfolgt in umgekehrter Reihenfolge.

Die Gasdruckfeder hat in der geschlossenen Position keine Funktion, da ihr Hebelarm gegenüber der Antriebswelle nahezu gleich null ist.

## Patentansprüche

1. Antriebseinrichtung (7) für einen Verdeckkastendeckel (4) eines Kraftfahrzeuges, der von einer Schließstellung in eine Offenstellung bewegbar ist und umgekehrt, mit den folgenden Merkmalen:
- der Verdeckkastendeckel ist in der Schließstellung über zumindest einen Verschluss (8) am feststehenden Aufbau festlegbar, wobei mittels der Antriebseinrichtung (7) der zumindest eine Verschluss (8) verriegelbar bzw. entriegelbar ist,
- die Antriebseinrichtung (7) umfasst ein angetriebenes Viergelenkgetriebe (11), das den Verdeckkastendeckel (4) von einer Schließstellung (A) in eine hochgeschwenkte Offenstellung (B) bewegt und umgekehrt,
- einer der Lenker (z.B. 12) des Viergelenkgetriebes (11) steuert einen Schlepphebel (13), der über Verbindungselemente den zumindest einen Verschluss (8) für den Verdeckkastendeckel (4) betätigt,
- bei geschlossenem und verriegeltem Verdeckkastendeckel (4) ist der Schlepphebel (13) durch den Lenker (12) mechanisch gegen Zurückdrehen gesichert.

2. Antriebseinrichtung nach Anspruch 1, **dadurch gekennzeichnet, daß** bei geschlossenem und verriegeltem Verdeckkastendeckel (4) das Viergelenkgetriebe (11) eine Übertotpunktlage einnimmt.

3. Antriebseinrichtung nach Anspruch 1, **dadurch gekennzeichnet, daß** das Viergelenkgetriebe (11) hydraulisch, elektrisch, mechanisch oder dgl. angetrieben ist.

4. Antriebseinrichtung nach Anspruch 1, **dadurch gekennzeichnet, daß** das Viergelenkgetriebe (11) zwei durch ein Koppelglied (22) gelenkig miteinander verbundene Lenker (12, 23) umfaßt, wobei der erste Lenker (23) verdrehfest mit einer Antriebswelle (24) für den Verdeckkastendeckel (4) verbunden ist, während der zweite Lenker (12) auf einem Bolzen (29) eines Antriebsgehäuses (17) der Antriebseinrichtung (7) drehbar gelagert ist.

5. Antriebseinrichtung nach einem oder mehreren der vorangegangenen Ansprüche, **dadurch gekennzeichnet, daß** der das Koppelglied (22) mit dem zweiten Lenker (12) verbindende Bolzen (30) zumindest auf einer Seite den außenliegenden Lenker (12) überragt, wobei auf den vorstehenden Bereich eine drehbare Hülse (31) aufgesetzt ist, die mit einer darüberliegenden Kurvenbahn (32) des Schlepphebels (13) in Wirkverbindung steht.

6. Antriebseinrichtung nach einem oder mehreren der vorangegangenen Ansprüche, **dadurch gekennzeichnet, daß** die Winkelgeschwindigkeit der Antriebswelle (24, 35) in den Endpositionen des Verdeckkastendeckels (4) kleiner ist als im dazwischenliegenden Bereich der Verschwenkbewegung.

7. Antriebseinrichtung nach einem oder mehreren der vorangegangenen Ansprüche, **dadurch gekennzeichnet, daß** der Verdeckkastendeckel (4) über zwei Verschlüsse (8) am feststehenden Aufbau in Lage gehalten ist und daß jeder Verschluß (8) über einen Bowdenzug (10) mit der Antriebseinrichtung (7) zusammenwirkt.

8. Antriebseinrichtung nach einem oder mehreren der vorangegangenen Ansprüche, **dadurch gekennzeichnet, daß** der der Antriebswelle (24) abgekehrte zweite Lenker (12) des Viergelenkgetriebes (11) mit einem Notbetätigungselement (51) zur manuellen Betätigung verbunden ist.

9. Antriebseinrichtung nach einem oder mehreren der vorangegangenen Ansprüche, **dadurch gekennzeichnet, daß** die wesentlichen Bauteile der Antriebseinrichtung (7) symmetrisch zu einer vertikalen Mittelebene eines Hydraulikzylinders (14) angeordnet sind.

## Claims

1. Driving device for a folding-top compartment lid of a motor vehicle, which can be moved from a closed position into an open position and vice versa, it being possible for the folding-top compartment lid to be secured in the closed position on the fixed structure via at least one fastener, and it also being possible for the at least one fastener to be locked and unlocked by means of the driving device, **characterized in that** the driving device (7) comprises a driven four-bar linkage (11) which moves the folding-top compartment lid (4) from a closed position (A) into a swung-up open position (B) and vice versa, one of the links (for example 12) of the four-bar linkage (11) controlling a drag lever (13) which actuates the at least one fastener (8) for the folding-top compartment lid (4) via connecting elements, and **in that** when the folding-top compartment lid (4) is closed and locked, the drag lever (13) is secured by the link (12) mechanically against rotating back.

2. Driving device according to Claim 1, **characterized in that** when the folding-top compartment lid (4) is closed and locked, the four-bar linkage (11) assumes a position beyond the dead centre.

3. Driving device according to Claim 1, **characterized in that** the four-bar linkage (11) is driven hydraulically, electrically, mechanically or in a similar manner.

4. Driving device according to Claim 1, **characterized in that** the four-bar linkage (11) comprises two links (12, 23) which are connected in an articulated manner to each other by a coupling element (22), the first link (23) being connected in a rotationally fixed manner to a drive shaft (24) for the folding-top compartment lid (4) while the second link (12) is mounted rotatably on a bolt (29) of a drive housing (17) of the driving device (7).

5. Driving device according to one or more of the preceding claims, **characterized in that** the bolt (30) which connects the coupling element (22) to the second link (12) protrudes at least on one side over the outer link (12), a rotatable sleeve (31) being placed onto the protruding region, which sleeve is actively connected to a curved path (32), situated above it, of the drag lever (13).

6. Driving device according to one or more of the preceding claims, **characterized in that** the angular speed of the drive shaft (24, 35) is smaller in the end positions of the folding-top compartment lid (4) than in the pivoting-movement region which is situated in between.

7. Driving device according to one or more of the preceding claims, **characterized in that** the folding-top compartment lid (4) is held in position on the fixed structure via two fasteners (8), and each fastener (8) interacts with the driving device (7) via a Bowden cable (10).

8. Driving device according to one or more of the preceding claims, **characterized in that** that second link (12) of the four-bar linkage (11) which faces away from the drive shaft (24) is connected to an emergency actuation element (51) for manual actuation.

9. Driving device according to one or more of the preceding claims, **characterized in that** the essential components of the driving device (7) are arranged symmetrically with respect to a vertical central plane of a hydraulic cylinder (14).

## Revendications

1. Dispositif d'entraînement pour un couvercle de coffre de capote d'un véhicule automobile, déplaçable d'une position fermée dans une position ouverte et inversement, le couvercle de coffre de capote en position fermée pouvant être fixé à la carrosserie fixe par le biais d'au moins une fermeture et également l'au moins une fermeture pouvant être verrouillée et déverrouillée au moyen du dispositif d'entraînement, **caractérisé en ce que** le dispositif d'entraînement (7) comprend un quadrilatère articulé entraîné (11), qui déplace le couvercle de coffre de capote (4) d'une position fermée (A) dans une position ouverte (B) pivotée vers le haut et inversement, l'un des bras d'articulation (par exemple 12) du quadrilatère articulé (11) commandant un levier d'entraînement (13), qui actionne, par le biais d'éléments de liaison, l'au moins une fermeture (8) pour le couvercle de coffre de capote (4) et **en ce que** le levier d'entraînement (13) est maintenu mécaniquement par le bras d'articulation (12) pour l'empêcher de retourner en arrière lorsque le couvercle de coffre de capote (4) est fermé et verrouillé.

2. Dispositif d'entraînement selon la revendication 1, **caractérisé en ce que** le quadrilatère articulé (11) adopte une position de point mort haut lorsque le couvercle de coffre de capote (4) est fermé et verrouillé.

3. Dispositif d'entraînement selon la revendication 1, **caractérisé en ce que** le quadrilatère articulé (11) est entraîné de manière hydraulique, électrique, mécanique ou similaire.

4. Dispositif d'entraînement selon la revendication 1, **caractérisé en ce que** le quadrilatère articulé (11) comprend deux bras d'articulation (12, 23) articulés l'un à l'autre par un organe de couplage (22), le premier bras d'articulation (23) étant connecté de manière fixe en rotation à un arbre d'entraînement (24) pour le couvercle de coffre de capote (4), tandis que le deuxième bras d'articulation (12) est monté rotatif sur un boulon (29) d'un boîtier d'entraînement (17) du dispositif d'entraînement (7).

5. Dispositif d'entraînement selon l'une ou plusieurs des revendications précédentes, **caractérisé en ce que** le boulon (30) connectant l'organe de couplage (22) au deuxième bras d'articulation (12) dépasse au moins d'un côté du bras d'articulation externe (12), une douille rotative (31) étant placée sur la partie en saillie, laquelle douille est en liaison coopérante avec une trajectoire courbe (32) au-dessus d'elle, du levier d'entraînement (13).

6. Dispositif d'entraînement selon l'une ou plusieurs des revendications précédentes, **caractérisé en ce que** la vitesse angulaire de l'arbre d'entraînement (24, 35) dans les positions d'extrémité du couvercle de coffre de capote (4) est plus petite que dans la partie intermédiaire du mouvement de pivotement.

7. Dispositif d'entraînement selon l'une ou plusieurs des revendications précédentes, **caractérisé en ce que** le couvercle de coffre de capote (4) est maintenu en position par le biais de deux fermetures (8) sur la carrosserie fixe, et **en ce que** chaque fermeture (8) coopère par le biais d'un câble Bowden (10) avec le dispositif d'entraînement (7).

8. Dispositif d'entraînement selon l'une ou plusieurs des revendications précédentes, **caractérisé en ce que** le deuxième bras d'articulation (12) du quadrilatère articulé (11), éloigné de l'arbre d'entraînement (24), est connecté à un élément d'actionnement d'urgence (51) en vue d'un actionnement manuel.

9. Dispositif d'entraînement selon l'une ou plusieurs des revendications précédentes, **caractérisé en ce que** les éléments constitutifs essentiels du dispositif d'entraînement (7) sont disposés symétriquement par rapport à un plan médian vertical d'un cylindre hydraulique (14).
